# EUROPEAN PATENT APPLICATION

(11) **EP 3 617 023 A1**
(43) Date of publication of application: **04.03.2020**
(21) Application number: 18191762.6
(22) Date of filing: 30.08.2018
(51) Int. Cl.: B60W 50/02, B60W 30/10, B60W 50/00, G05D 1/02, G08G 1/16, B60W 30/09, B60W 30/095

(54) **COMPUTATIONALLY EFFICIENT FAIL-SAFE TRAJECTORY PLANNING FOR SELF-DRIVING VEHICLES USING CONVEX OPTIMIZATION**

(71) Applicant: Bayerische Motoren Werke Aktiengesellschaft, 80809 München (DE)
(72) Inventor: Pek, Christian, 85716 Unterschleißheim (DE)

(57) **Abstract**

An aspect of the invention describes a system for determining fail-safe trajectories for an automated vehicle, said system configured to: receive a previously determined fail-safe trajectory for the automated vehicle; determine at least one constraint for determining an updated fail-safe trajectory, with the constraint considering collision with at least one other road user; and perform at least one of the following determining the updated fail-safe trajectory in such a way that the at least one constraint is taken into account; or performing the previously determined fail-safe trajectory, if the at least one constraint does not allow the determination of at least one trajectory for the automated vehicle taking the at least one constraint into account.

## Description

This invention relates to a system and a method for the determination of fail-safe trajectories for an automated vehicle.

An automated vehicle is a vehicle with automated longitudinal guidance and/or automated lateral guidance. The term "automated vehicle" also comprises an autonomous vehicle. The term "automated vehicle" comprises in particular a vehicle with an arbitrary level of automation, for example the levels of automation that are defined in the standard SAE J3016 (SAE - Society of Automotive Engineering):
Level 0: Automated system issues warnings and may momentarily intervene but has no sustained vehicle control.
Level 1 ("hands on"): The driver and the automated system share control of the vehicle. Examples are Adaptive Cruise Control (ACC), where the driver controls steering and the automated system controls speed; and Parking Assistance, where steering is automated while speed is under manual control. The driver must be ready to retake full control at any time. Lane Keeping Assistance (LKA) Type II is a further example of level 1 self-driving.
Level 2 ("hands off"): The automated system takes full control of the vehicle (accelerating, braking, and steering). The driver must monitor the driving and be prepared to intervene immediately at any time if the automated system fails to respond properly. The shorthand "hands off" is not meant to be taken literally. In fact, contact between hand and wheel is often mandatory during SAE 2 driving, to confirm that the driver is ready to intervene.
Level 3 ("eyes off"): The driver can safely turn their attention away from the driving tasks, e.g. the driver can text or watch a movie. The vehicle will handle situations that call for an immediate response, like emergency braking. The driver must still be prepared to intervene within some limited time, specified by the manufacturer, when called upon by the vehicle to do so.
Level 4 ("mind off"): As level 3, but no driver attention is ever required for safety, i.e. the driver may safely go to sleep or leave the driver's seat. Self-driving is supported only in limited spatial areas (geofenced) or under special circumstances, like traffic jams. Outside of these areas or circumstances, the vehicle must be able to safely abort the trip, i.e. park the car, if the driver does not retake control.
Level 5 ("steering wheel optional"): No human intervention is required at all. An example would be a robotic taxi.

Apart from automated vehicles, it is known that two-dimensional trajectories for guiding vehicles can be determined. It is also known from Falcone et al. "A linear time varying model predictive control approach to the integrated vehicle dynamics control problem in autonomous systems", Proceedings of the IEEE International Conference on Decision and Control, 2007, pp. 2980-2985, that the problem of planning a two-dimensional trajectory can be approximated by separating motions into a longitudinal and a lateral component.

The development of self-driving vehicles promises enhanced road safety. However, after test vehicles encountered their first accidents, multiple institutions around the world raised concerns regarding safe motion planning.

Therefore, the purpose of the invention is to increase safety in arbitrary traffic situations.

One aspect of the invention describes a system for determining fail-safe trajectories for an automated vehicle.

A fail-safe trajectory is in particular a trajectory for the automated vehicle that brings the automated vehicle into a safe state of the automated vehicle without colliding with obstacles, with a safe state of the automated vehicle being a specific state of the automated vehicle.

A fail-safe trajectory is alternatively in particular a trajectory for the automated vehicle that brings the automated vehicle into a safe state of the automated vehicle with the severity of possible collisions with obstacles being limited. For example, the severity of possible collisions with obstacles may be limited to car body damage.

The state of the automated vehicle comprises in particular at least the spatial position of the automated vehicle, the orientation of the automated vehicle and/or the dynamics of the automated vehicle, with the dynamics of the automated vehicle comprising at least the velocity of the automated vehicle, the acceleration of the automated vehicle and/or the deceleration of the automated vehicle.

The state of the automated vehicle is in particular collision free with respect to at least one obstacle at one specific point in time, if the automated vehicle does not collide with the at least one obstacle at that point in time.

However, being in a collision-free state at a first point in time does not mean that the automated vehicle will also be in a collision-free state at a second point in time, which is succeeding the first point in time. Therefore not every collision-free state of the automated vehicle is also a safe state.

A safe state of the automated vehicle is in particular a state of the automated vehicle at a first point in time in which the vehicle can be brought into another safe state of the vehicle at a second point in time without colliding with obstacles, wherein the second point in time is later than the first point in time.

An automated vehicle that is standing still is in particular assumed to be in a safe state. According to the definition of a safe state of the automated vehicle that was given before, every state of the automated vehicle, from with the automated vehicle can be brought into standstill without colliding with obstacles, is in particular also a safe state.

When the safety of a state is assessed in practice, in particular the range of motion of obstacles and/or traffic rules can be considered. For example, if an obstacle is a car, then the range of motion of the car is limited by the acceleration potential of the engine of the car, by the deceleration potential of the brakes of the car, and/or by the steering stops of the steering axle of the car.

It may be difficult to determine the range of motion of an obstacle in practice, however it is possible to estimate a "worst case" range of motion of the obstacle by analyzing the type of the obstacle. It is for example possible to determine an upper bound for the velocity, with which a pedestrian, a cyclist or a car can move. Analogous bounds can for example be derived for acceleration, deceleration or tractability.

Said system is configured to receive a previously determined fail-safe trajectory for the automated vehicle.

In particular, the previously determined fail-safe trajectory has been previously determined by the system itself.

Said system is furthermore configured to determine at least one constraint for determining an updated fail-safe trajectory, with the constraint considering collision with at least one other road user or obstacle.

The constraint is in particular at least one forbidden state of the automated vehicle. For example, the state may be forbidden, because it is a state of collision between the automated vehicle and the other road user or obstacle, in which the collision is already occurring. Another example for a forbidden state is a collision-free state of the vehicle, in which a collision between the automated vehicle and the other road user or obstacle in the future is unavoidable, for example because of the laws of physics and the dynamics of the automated vehicle and the other road user or obstacle. Another example for a forbidden state is a collision-free state, in which a collision between the automated vehicle and the other road user or obstacle in the future is avoidable, but not by the means of the automated vehicle itself. Another example for a forbidden state is a state, which does not comply to at least one traffic rule, like a state that requires the automated vehicle to drive over a solid line or a state that requires the automated vehicle to overtake another vehicle on the wrong side.

In particular, the constraint is a set of states of the automated vehicle, especially a convex set of states of the automated vehicle or a convex-approximated set of states of the automated vehicle. The property of being a convex set of states helps to reduce the computational complexity of the subsequent processing steps.

The at least one constraint may in particular comprise a safety-critical part and a riding comfort part, with the safety-critical part comprising states that are forbidden because of possible collisions between the automated vehicle and the other road user or obstacle, and with the riding comfort part comprising states that are not forbidden because of possible collisions between the automated vehicle and the other road user or obstacle, but that are forbidden because of the riding comfort of the passengers of the automated vehicle.

Said system is furthermore configured to perform at least one of the following, in particular depending on if the at least one constraint does allow or does not allow the determination of at least one trajectory for the automated vehicle taking the at least one constraint into account.

Said system is configured to determine the updated fail-safe trajectory in such a way that the at least one constraint is taken into account; or to perform the previously determined fail-safe trajectory, if the at least one constraint does not allow the determination of at least one trajectory for the automated vehicle taking the at least one constraint into account.

The determination of the first fail-safe trajectory does in particular not include the verification of at least one possible fail-safe trajectory or rather the verification of at least one candidate for a fail-safe trajectory. Because of the inventive definition of the safe state, every fail-safe trajectory, which is determined by the system, is inherently safe.

To achieve low computational effort, the determination of the updated fail-safe trajectory can in particular be separated into a longitudinal component and/or a lateral component by using a convex approximation of the underlying motion planning problem. To put it simply, the problem of planning a high-dimensional trajectory can be approximated by planning multiple lower-dimensional trajectories. For example the planning of a two-dimensional trajectory in Euclidean space can be approximated by the planning of one trajectory that is focusing on longitudinal movement and one trajectory that is focusing on lateral movement.

Therefore, in a preferred embodiment of the invention, a fail-safe trajectory comprises a longitudinal part. Moreover, the determination of at least one constraint for determining the updated fail-safe trajectory comprises the determination of at least one longitudinal constraint for determining the updated fail-safe trajectory.

In this preferred embodiment, the system is configured to determine an evasive acceleration, if collision-free decelerating is not possible with respect to the longitudinal constraint, with the evasive acceleration in particular corresponding to a limit for the acceleration of the automated vehicle that allows for a safe lateral evasive maneuver.

An evasive lateral maneuver is in particular safe, if no slip occurs between at least one tire of the automated vehicle and the road surface, wherein slip is a relative motion between the tire and the road surface.

The evasive acceleration is in particular an acceleration in longitudinal direction of the automated vehicle or an acceleration in lateral direction of the automated vehicle.

An acceleration in longitudinal direction of the automated vehicle and an acceleration in lateral direction of the automated vehicle can both be used to control a safe lateral maneuver, as both accelerations are related to each other, which is commonly illustrated in the so called "traction circle".

Moreover, the system is configured to determine the longitudinal part of the updated fail-safe trajectory in such a way that the at least one longitudinal constraint is taken into account; and to determine the longitudinal part of the updated fail-safe trajectory considering the evasive acceleration, if collision-free decelerating is not possible considering the longitudinal constraint.

In another alternative or additional preferred embodiment of the invention, a fail-safe trajectory comprises a lateral part and the determination of at least one constraint for determining the updated fail-safe trajectory comprises determining at least one lateral constraint for determining the updated fail-safe trajectory.

In this preferred embodiment, the system is configured to determine the lateral part of the updated fail-safe trajectory; or perform the previously determined fail-safe trajectory, if the lateral constraint does not allow the determination of at least one trajectory.

In another preferred embodiment, the system is configured to determine or receive an intended motion of the automated vehicle; and to determine an initial state for the updated fail-safe trajectory considering the intended motion of the automated vehicle.

In particular, the updated fail-safe trajectory does not have to begin in the current state of the vehicle, but it can begin in a future state of the vehicle.

In particular, the initial state, where the updated fail-safe trajectory begins, is a point of no return in the intended motion of the automated vehicle, after which the range of motion of the automated vehicle cannot guarantee absence of collisions with obstacles in any case.

Another aspect of the invention describes a method for determining fail-safe trajectories for an automated vehicle.

On step of the method is receiving a previously determined fail-safe trajectory for the automated vehicle.

Another step of the method is determining at least one constraint for determining an updated fail-safe trajectory, with the constraint considering collision with at least one other road user.

Another step of the method is performing at least one of the following:
- determining the updated fail-safe trajectory in such a way that the at least one constraint is taken into account; or
- performing the previously determined fail-safe trajectory, if the at least one constraint does not allow the determination of at least one trajectory for the automated vehicle taking the at least one constraint into account.

For a better understanding of the present invention, and to show how the same may be carried into effect, reference will now be made, by way of example, to the accompanying drawing, in which:
- Fig. 1a: shows an exemplified traffic situation and its effect on the determination of fail-safe trajectories,
- Fig. 1b: shows another exemplified traffic situation and its effect on the determination of fail-safe trajectories,
- Fig. 2: shows an exemplified flow chart for an execution of the invention, and
- Fig. 3: shows another exemplified flow chart for an execution of the invention.

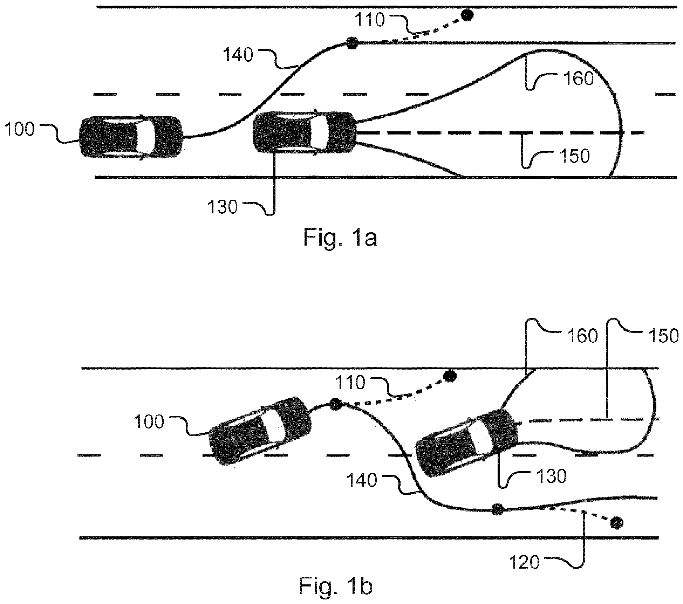

Fig. 1a shows a diagrammatic view of an exemplified traffic situation and the effect of the traffic situation on the determination of fail-safe trajectories 110, 120.

The figure shows an automated vehicle 110, which is following another road user 130. The automated vehicle 100 is intending to overtake the other road user 130 and therefore plans an intended motion 140 for the automated vehicle 100.

The planning of the intended motion 140 is based on the most likely trajectory 150 of the other road user 130.

In addition to the planning of the intended motion 140, the automated vehicle 100 is also determining a fail-safe trajectory 110, which is not based on the most likely trajectory 150 of the other road user 130, but which is based on the range of motion 160 of the other road user.

Fig. 1b shows a diagrammatic view of another exemplified traffic situation and the effect of the traffic situation on the determination of fail-safe trajectories 110, 120.

The traffic situation in Fig. 1b is based on the traffic situation in Fig. 1a but shows a later point in time.

In the traffic situation in Fig. 1b, the automated vehicle 100 has already started to overtake the other road user 130. However, the other road user 130 did not behave as expected and also switched to an adjacent lane.

The automated vehicle 100 therefore updates its intended motion 140 and also the most likely trajectory 150 of the other road user 130.

When the other road user 130 is actually following its most likely trajectory 150, automated vehicle 100 will not be able to overtake the other road user.

Considering the range of motion 160 of the other road user 130, the automated vehicle 100 determines an updated fail-safe trajectory 120 before it reaches the initial state of the previously calculated fail-safe trajectory 110.

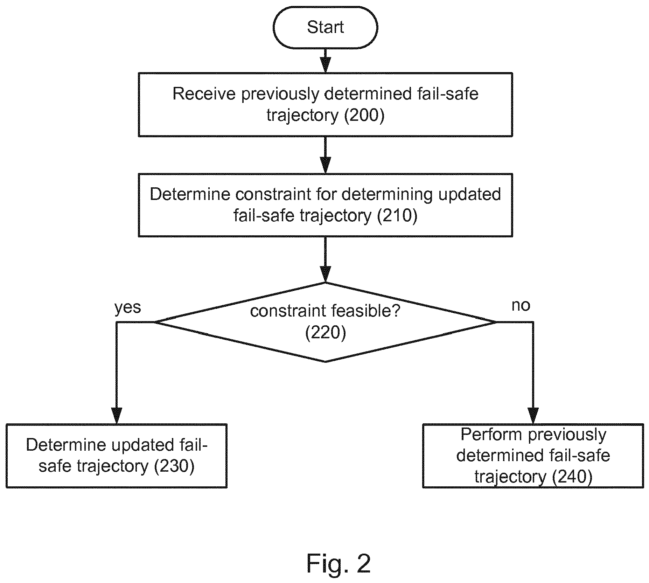

Fig. 2 show an exemplified execution of a system for determining fail-safe trajectories 110, 120 for an automated vehicle 100, wherein a fail-safe trajectory 110, 120 is a trajectory for the automated vehicle 100 that brings the automated vehicle 100 into a safe state of the automated vehicle 100 without colliding with obstacles 130.

A safe state of the automated vehicle 100 is a state of the automated vehicle 100 at a first point in time in which the automated vehicle 100 can be brought into another safe state of the automated vehicle 100 at a second point in time without colliding with obstacles 130, wherein the second point in time is later than the first point in time.

Said system is configured to receive 200 a previously determined fail-safe trajectory 110 for the automated vehicle 100. In particular, the previously determined fail-safe trajectory 110 has been determined by the system itself in a previous execution of the system.

In step 210, said system determines at least one constraint for determining an updated fail-safe trajectory 120, with the constraint considering collision with at least one other road user 130.

The constraint is in particular at least one forbidden state of the automated vehicle 100. For example, the state may be forbidden, because it is a state of collision between the automated vehicle 100 and the other road user 130 or obstacle, in which the collision is already occurring. Another example for a forbidden state is a collision-free state of the automated vehicle 100, in which a collision between the automated vehicle 100 and the other road user 130 or obstacle in the future is unavoidable, for example because of the laws of physics and the dynamics of the automated vehicle 100 and the other road user 130 or obstacle. Another example for a forbidden state is a collision-free state, in which a collision between the automated vehicle 100 and the other road user 130 or obstacle in the future is avoidable, but not by the means of the automated vehicle 100.

In particular, the constraint is a set of states of the automated vehicle 100, especially a convex set of states of the automated vehicle 100.

In step 220, said system is configured to determine if the previously in step 210 determined at least one constraint is feasible, which means that the system is verifying, if the at least one constraint allows the determination of at least one updated fail-safe trajectory 120.

In case that the constraint is feasible, which means that at least one updated fail-safe trajectory 120 can be determined, said system is configured to determine one updated fail-safe trajectory 120 in step 230 in such a way that the at least one constraint is taken into account.

If the constraint allows the determination of more than one updated fail-safe trajectory 120, the system is in particular configured to determine the most fitting updated fail-safe trajectory 120, for example by applying a cost function to the candidates for the updated fail-safe trajectory 120. This cost function can for example take the riding comfort of the driver of the automated vehicle 100 into account.

If the at least one constraint does not allow the determination of at least one trajectory for the automated vehicle 100 taking the at least one constraint into account, said system is configured to perform 240 the previously determined fail-safe trajectory 110.

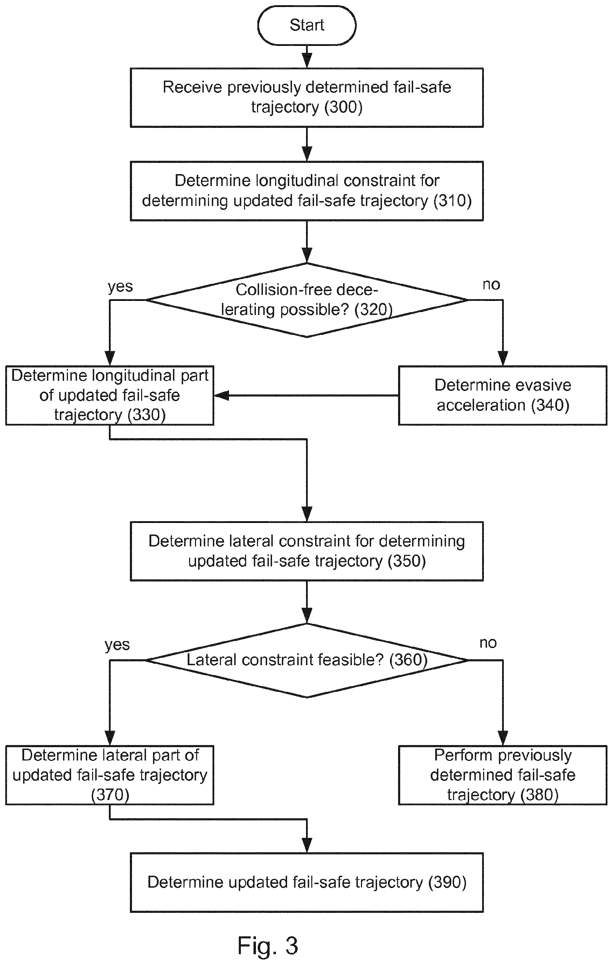

Fig. 3 show another exemplified execution of a system for determining fail-safe trajectories 110, 120 for an automated vehicle 100.

Said system is configured to receive 300 a previously determined fail-safe trajectory 110 for the automated vehicle 100.

The determination of the updated fail-safe trajectory 120 is separated into a longitudinal component and a lateral component in this example.

Therefore a fail-safe trajectory 110, 120 comprises a longitudinal part and the system is configured to determine 310 at least one longitudinal constraint for determining the updated fail-safe trajectory 120.

As studies have shown that vehicle drivers are more comfortable with longitudinal evasive maneuvers like braking than with lateral evasive maneuvers like sidestepping, said system is configured to check 320 if collision-free decelerating is possible with respect to the longitudinal constraint.

If collision-free decelerating is possible, the system is determining 330 the longitudinal part of the updated fail-safe trajectory 120.

If collision-free decelerating is not possible, the system is determining 340 an evasive acceleration, for example a limit for the lateral acceleration of the automated vehicle 100 for an evasive maneuver. Following this, said system is determining 330 the longitudinal part of the updated fail-safe trajectory 120 and taking into account that the updated fail-safe trajectory 120 necessarily required also a lateral part.

As the fail-safe trajectory 110, 120 comprises also a lateral part, the system is configured to determine 350 at least one lateral constraint for determining the updated fail-safe trajectory 120.

The system is configured to check 360 if the lateral constraint is feasible, which means for example that the system is configured to check, if at least one lateral part of an updated fail-safe trajectory 120 exists considering the lateral constraint.

If the lateral constraint does not allow the determination of at least one updated fail-safe trajectory 120, the system performs 380 the previously determined fail-safe trajectory 110.

If the lateral constraint allows the determination of at least one updated fail-safe trajectory 120, the system is configured to determine 370 the lateral part of the updated fail-safe trajectory 120.

Moreover, the system is configured to determine 390 the updated fail-safe trajectory 120 with respect to the already determined longitudinal and lateral parts of the updated fail-safe trajectory 120.

In particular, the system is configured to determine or receive an intended motion 140 of the automated vehicle 110; and to determine an initial state for the updated fail-safe trajectory 120 considering the intended motion 140 of the automated vehicle 100.

The initial state of the updated fail-safe trajectory 120 is for example a point of no return in the intended motion 140 of the automated vehicle 100, after which the range of motion of the automated vehicle 100 cannot guarantee absence of collisions with obstacles 130 in any case.

The updated fail-safe trajectory 120 has to be determined before the previously determined fail-safe trajectory 110 is unreachable by the automated vehicle 100, because otherwise the automated vehicle 100 would not be in a safe state any more.

## Claims

1. A system for determining fail-safe trajectories (110, 120) for an automated vehicle (100), said system configured to:
• receive a previously determined fail-safe trajectory (110) for the automated vehicle (100);
• determine at least one constraint for determining an updated fail-safe trajectory (120), with the constraint considering collision with at least one other road user (130); and
• perform at least one of the following
• determining the updated fail-safe trajectory (120) in such a way that the at least one constraint is taken into account; or
• performing the previously determined fail-safe trajectory (110), if the at least one constraint does not allow the determination of at least one trajectory for the automated vehicle (100) taking the at least one constraint into account.

2. The system according to claim 1, wherein the state of the automated vehicle (100) comprises at least the spatial position of the automated vehicle (100), the orientation of the automated vehicle (100) and/or the dynamics of the automated vehicle (100).

3. The system according to any of the previous claims, wherein a fail-safe trajectory (110, 120) is a trajectory for the automated vehicle (100) that brings the automated vehicle (100) into a safe state of the automated vehicle (100) without colliding with obstacles (130).

4. The system according to any of the previous claims, wherein a safe state of the automated vehicle (100) is a state of the automated vehicle (100) at a first point in time in which the automated vehicle (100) can be brought into another safe state of the automated vehicle (100) at a second point in time without colliding with obstacles (130), wherein the second point in time is later than the first point in time.

5. The system according any of the previous claims, wherein
• a fail-safe trajectory (110, 120) comprises a longitudinal part;
• the determination of at least one constraint for determining the updated fail-safe trajectory (120) comprises the determination of at least one longitudinal constraint for determining the updated fail-safe trajectory (120);
• with the system configured to:
• determine an evasive acceleration, if collision-free decelerating is not possible with respect to the longitudinal constraint, with the evasive acceleration in particular corresponding to a limit for the acceleration of the automated vehicle (100) that allows for a safe lateral evasive maneuver;
• determine the longitudinal part of the updated fail-safe trajectory (120) in such a way that the at least one longitudinal constraint is taken into account; and
• determine the longitudinal part of the updated fail-safe trajectory (120) considering the evasive acceleration, if collision-free decelerating is not possible considering the longitudinal constraint.

6. The system according to any of the previous claims, wherein
• a fail-safe trajectory (110, 120) comprises a lateral part;
• the determination of at least one constraint for determining the updated fail-safe trajectory (120) comprises determining at least one lateral constraint for determining the updated fail-safe trajectory (120);
• with the system configured to:
• determine the lateral part of the updated fail-safe trajectory (120); or
• perform the previously determined fail-safe trajectory (110), if the lateral constraint does not allow the determination of at least one trajectory.

7. The system according to any of the previous claims, with the system configured to:
• determine or receive an intended motion (140) of the automated vehicle (100); and
• determine an initial state for the updated fail-safe trajectory (120) considering the intended motion (140) of the automated vehicle (100).

8. The system according to claim 7, wherein the initial state of the updated fail-safe trajectory (120) is a point of no return in the intended motion (140) of the automated vehicle (100), after which the range of motion of the automated vehicle (100) cannot guarantee absence of collisions with obstacles (130) in any case.

9. Method for determining fail-safe trajectories (110, 120) for an automated vehicle (100), with the method comprising the steps of:
• receiving a previously determined fail-safe trajectory (110) for the automated vehicle (100);
• determining at least one constraint for determining an updated fail-safe trajectory (120), with the constraint considering collision with at least one other road user (130); and
• performing at least one of the following
• determining the updated fail-safe trajectory (120) in such a way that the at least one constraint is taken into account; or
• performing the previously determined fail-safe trajectory (110), if the at least one constraint does not allow the determination of at least one trajectory for the automated vehicle (100) taking the at least one constraint into account.
